# EUROPÄISCHE PATENTSCHRIFT

(11) **EP 1 245 348 B1**
(45) Veröffentlichungstag und Bekanntmachung des Hinweises auf die Patenterteilung: **20.12.2017**
(21) Anmeldenummer: 02007052.0
(22) Anmeldetag: 27.03.2002
(51) Int. Cl.: B25J 15/04, B23Q 3/155, B05B 13/04

(54) **Werkzeugwechselsystem für eine Maschine**
Tool changing mechanism for a machine
Système de changement d'outil d'une machine

(30) Priorität: 29.03.2001 DE 10115467
(43) Veröffentlichungstag der Anmeldung: 02.10.2002
(73) Patentinhaber: Dürr Systems AG, 74321 Bietigheim-Bissingen (DE)
(72) Erfinder: Nolte, Hans Jürgen, Dr., 70565 Stuttgart (DE); Melcher, Rainer, 71720 Oberstenfeld (DE); Baumann, Michael, 74223 Flein (DE); Giuliano, Stefano, 70839 Gerlingen (DE)
(74) Vertreter: Heusler, Wolfgang

(56) Entgegenhaltungen:
- US-A- 4 737 611
- US-A- 4 944 459
- US-A- 5 044 063
- PATENT ABSTRACTS OF JAPAN vol. 017, no. 574 (M-1498), 19. Oktober 1993 (1993-10-19) -& JP 05 169382 A (NITTA IND CORP;OTHERS: 01), 9. Juli 1993 (1993-07-09)

## Beschreibung

Die Erfindung betrifft ein Werkzeugwechselsystem mit einem automatisch von einer Beschichtungsmaschine bewegbaren Zerstäuber, einer Zerstäuberwechseleinrichtung, die durch ein an der Beschichtungsmaschine angebrachtes Festteil und ein davon lösbares, den Zerstäuber tragendes Teil gebildet ist, und mit einer von der Beschichtungsmaschine anfahrbaren externen Wechselstation, an der der Zerstäuber selbsttätig von der Beschichtungsmaschine gelöst und abgelegt wird. Insbesondere kann es sich um einen Roboter und um einen Zerstäuber für die Serienbeschichtung von Werkstücken wie beispielsweise Fahrzeugkarossen handeln.

Stand der Technik sind Werkzeugwechselsysteme für Lackierroboter, deren Zerstäuber an einem das lösbare Teil bildenden Flansch befestigt ist, der durch pneumatische Kräfte an einem das Festteil bildenden Maschinenflansch festgehalten wird. Zum Lösen des Zerstäubers wird vom Roboter selbst ein Luftanschluß zum Öffnen eines Schließzylinders der Zerstäuberwechseleinrichtung des Roboters betätigt. Diese Luftversorgung durch den Roboter selbst kann bei Fehlsteuerung zu ungewolltem Ablösen des Zerstäubers ggf. während des Beschichtungsbetriebs führen, was nicht nur mechanische Schäden und den Ausfall der Beschichtungsanlage zur Folge hat, sondern auch eine unzulässige Explosionsgefährdung durch das Trennen elektrischer Verbindungen des beispielsweise elektrostatischen Zerstäubers,

Aus US 4 944 459 ist ein Zerstäuberwechselsystem für einen Lackierroboter bekannt, bei dem jeweils einer von verschiedenen Farben fest zugeordnete Zerstäuber auf einer Halteplatte bereitstehen und bei Bedarf von dem Roboter abgeholt und wieder abgelegt werden. Der jeweilige Zerstäuber ist am Handgelenk des Roboters durch einen Mechanismus befestigt, der durch Betätigung eines Schalters an der Halteplatte gesteuert wird.

JP 05169382 A offenbart ein Werkzeugwechselsystem für einen Roboter mit einer Werkzeugwechseleinrichtung, die durch ein an dem Roboter angebrachtes Festteil und ein davon lösbares, das Werkzeug tragendes Teil gebildet ist, wobei das lösbare Teil an dem Festteil durch eine pneumatische Verriegelung befestigt ist, die durch Ansteuern eines Luftanschlusses im Festteil des Roboters lösbar ist. Das Werkzeug wird an einer von dem Roboter anfahrbaren externen Wechselstation selbsttätig von dem Roboter gelöst und abgelegt, wobei der Luftanschluss des Roboters von einer in der Wechselstation installierten externen Steuereinrichtung mit einem Luftversorgungsanschluss bei Ablage des Werkzeugs betätigbar ist.

Aus US 4 737 611 ist eine drehbare Halterung für wechselbare Schweißwerkzeuge einer wie ein Roboter programmierbaren Schweißmaschine bekannt.

Aufgabe der Erfindung ist ein Werkzeugwechselsystem, bei dem die Gefahr eines ungewollten Öffnens einer Zerstäuberwechseleinrichtung mit Sicherheit verhindert wird. Diese Aufgabe wird durch die Merkmale der Patentansprüche gelöst.

Bei dem hier beschriebenen System kann die in der Beschichtungsmaschine enthaltene Zerstäuberwechseleinrichtung erst dann geöffnet werden, wenn der Zerstäuber sicher fixiert in der externen Wechselstation abgelegt und an die dortigen Anschlüsse angedockt ist. Bei elektrostatischen Lackierrobotern oder sonstigen Beschichtungsmaschinen ist ferner wichtig, daß der Zerstäuber beim Lösen seiner Halterung durch Öffnen der Wechseleinrichtung zusätzlich geerdet ist.

Die Ansteuerung des Luftanschlusses kann automatisch in der Wechselstation erfolgen, beispielsweise mit einem Druckluftsignal oder ggf. durch Öffnen des Verschlusses. Der außenliegende Luftanschluß hat den zusätzlichen Vorteil, daß bei Bedarf auch schnelles manuelles Trennen des Werkzeugs von der Maschine mittels einer Vorrichtung ähnlich einer Handluftpumpe möglich ist.

Als Ausführungsbeispiel der Erfindung wird die in der DE 101 15 470 beschriebene rondellartige Wechselstation für Zerstäuber und sonstige Werkzeuge einer Beschichtungsanlage für die Serienbeschichtung von Fahrzeugkarossen betrachtet. In der Zeichnung zeigen
- Figur 1: die Halteplatte der Wechselstation; und
- Figur 2: den in die Haltplatte einsetzbaren Flanschteil eines Zerstäubers.

Die Halteplatte 10 hat sechs Ablageplätze 12 für die wechselbaren (nicht dargestellten) Zerstäuber und/oder sonstige Werkzeuge, wie z.B. Haubenöffner, Messgeräte usw., deren von dem Festteil (F) beispielsweise eines Lackierroboters lösbares Flanschteil 11 im Betrieb von einem pneumatischen Schließzylinder an dem Festteil des Roboters festgehalten wird.

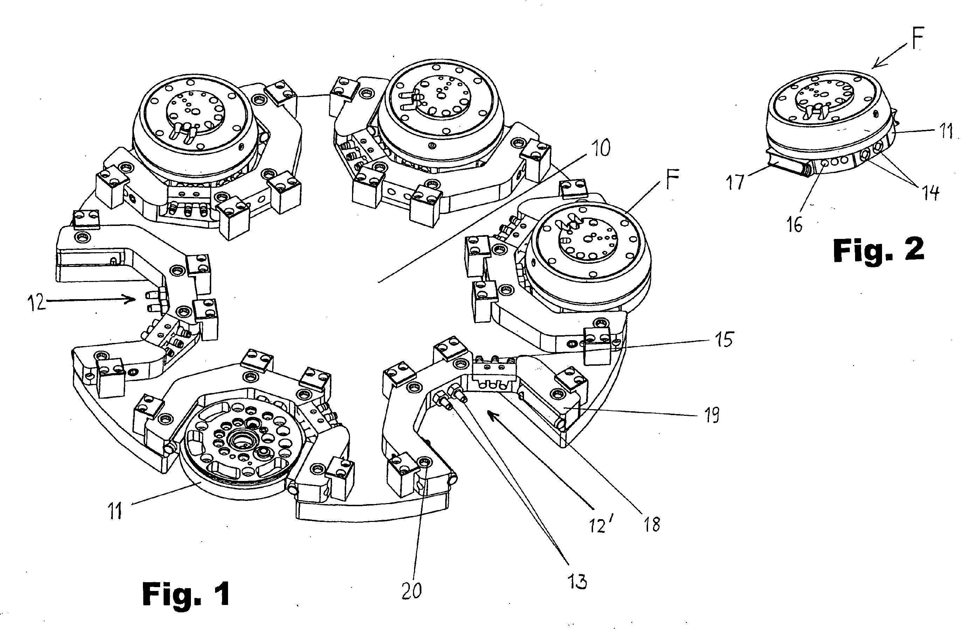

Die Ablageplätze 12 sind durch gabelförmige Ausnehmungen gebildet, in die die von dem Roboter abtrennbaren Flanschteile 11 der Werkzeuge in Richtung des Pfeiles 12' eingebracht werden können. Eine vorzugsweise in allen drei Raumachsen schwimmend gelagerte Werkzeugablage 19 weist Medienanschlüsse 13 für Luft, Spülmittel und andere Betriebsmedien, Identifikationseinrichtungen 15 und einen einstellbaren federbelasteten Bolzen 18 auf. Beim Einsetzen der Flanschteile 11 in die Ablageplätze 12 werden an den Flanschteilen 11 angeordnete Luftanschlüsse 14 (Fig. 2), die im abgekuppelten Zustand verschlossen sind und beim Andocken an die Anschlüsse 13 geöffnet werden, mit den Anschlüssen 13 verbunden. Die Anschlüsse 13 können auch zum Erden der Zerstäuber dienen. Die Identifikationseinrichtungen 15 der Ablageplätze werden beim Einsetzen der Zerstäuber mit im Flanschsteil 11 auswechselbar angeordneten Einsätzen 53 für die Typenerkennung verbunden. Außerdem weist das Flanschteil 11 eine Zentriereinrichtung 17 auf, die beim Einsetzen des Flanschteiles 11 in den Ablageplatz 12 in einen einstellbaren federbelasteten Bolzen 18 eingreift. Das Zusammenspiel des Bolzens 18 mit der Zentriereinrichtung 17 dient der Lagefixierung des Flanschteiles 11 in Normalrichtung der Halteplatte 10. Bei den bei 20 erkennbaren Elementen handelt es sich um eine beispielsweise durch Kugeldruckstücke gebildete Einrichtung zur Zentrierung der Ablagegabel in einer vorgeschriebenen Stellung in einem Prismeneinsatz.

## Patentansprüche

1. Werkzeugwechselsystem mit
einem automatisch von einer Beschichtungsmaschine bewegbaren Zerstäuber
und einer Zerstäuberwechseleinrichtung, die durch ein an der Beschichtungsmaschine angebrachtes Festteil (F) und ein davon lösbares, den Zerstäuber tragendes Teil (11) gebildet ist,
wobei das den Zerstäuber tragende lösbare Teil (11) an dem Festteil (F) durch eine pneumatische Verriegelung befestigt ist, die durch Ansteuern eines Luftanschlusses (14) der Zerstäuberwechseleinrichtung lösbar ist, der an dem den Zerstäuber tragenden lösbaren Teil (11) angeordnet ist,
und mit einer von der Beschichtungsmaschine anfahrbaren externen Wechselstation (10), an der der Zerstäuber selbsttätig von der Beschichtungsmaschine gelöst und abgelegt wird,
wobei der an dem lösbaren Teil (11) angeordnete Luftanschluss (14) von einer in der Wechselstation (10) installierten externen Steuereinrichtung mit einem Luftanschluss (13) der Wechselstation bei Ablage des Zerstäubers betätigbar ist.

2. Werkzeugwechselsystem nach Anspruch 1, **dadurch gekennzeichnet, dass** der Zerstäuber nur dann von dem Festteil (F) selbsttätig lösbar ist, wenn das lösbare Teil (11) an den Luftanschluss (13) der Wechselstation (10) angedockt ist.

3. Werkzeugwechselsystem nach Anspruch 1 oder 2, **dadurch gekennzeichnet, dass** der Zerstäuber beim Andocken an den Luftanschluss (13) der Wechselstation (10) durch diesen geerdet wird.

4. Werkzeugwechselsystem nach einem der Ansprüche 1 bis 3, **dadurch gekennzeichnet, dass** der Luftanschluss (14) des lösbaren Teils (11) automatisch in der Wechselstation (10) ansteuerbar ist.

5. Werkzeugwechselsystem nach einem der vorangehenden Ansprüche, **dadurch gekennzeichnet, dass** der Luftanschluss (13) der Wechselstation (10) von außen zugänglich ist.

6. Werkzeugwechselsystem nach einem der vorangehenden Ansprüche, **dadurch gekennzeichnet, dass** der Luftanschluss (13) der Wechselstation (10) sich in einer drehbaren und/oder linear verfahrbaren Halteplatte (10) der Zerstäuberwechseleinrichtung befindet, in der der Zerstäuber ablegbar ist.

7. Werkzeugwechselsystem nach einem der vorangehenden Ansprüche 1 bis 6, **dadurch gekennzeichnet, dass** das lösbare Teil ein Flanschteil (11) des Zerstäubers ist.

8. Werkzeugwechselsystem nach einem der vorangehenden Ansprüche, **dadurch gekennzeichnet, dass** in der externen Wechselstation (10) außer dem Zerstäuber sonstige Werkzeuge ablegbar und an dortige Anschlüsse (13) andockbar sind.

## Claims

1. Tool change system with
an atomizer automatically moveable by a coating machine
and an atomizer change device formed by a fixed part (F) mounted on the coating machine and a part (11) that is releasable from it, carrying the atomizer,
in which the releasable part (11) carrying the atomizer is fastened to the fixed part (F) by a pneumatic lock that can be released by operation of an air connection (14) of the atomizer change device arranged on the releasable part (11) carrying the atomizer,
and with an external change station (10) reachable by the coating machine, on which the atomizer is automatically released from the coating machine and is deposited,
wherein the air connection (14) arranged on the releasable part (11) can be operated by an external control device installed in the change station (10) with an air connection (13) of the change station during deposition of the atomizer.

2. Tool change system according to Claim 1, **characterized by** the fact that the atomizer is only releasable from the fixed part (F) automatically when the releasable part (11) is coupled to the air connection (13) of the change station (10).

3. Tool change system according to Claim 1 or 2, **characterized by** the fact that the atomizer is grounded during coupling to the air connection (13) of the change station (10) by the air connection.

4. Tool change system according to one of the Claims 1 to 3, **characterized by** the fact that the air connection (14) of the releasable part (11) is automatically controllable in the change station (10).

5. Tool change system according to one of the preceding Claims, **characterized by** the fact that the air connection (13) of the change station (10) is accessible from the outside.

6. Tool change system according to one of the preceding claims, **characterized by** the fact that the air connection (13) of the change station (10) is situated in a rotatable and/or linearly moveable mounting plate (10) of the atomizer change device in which the atomizer can be deposited.

7. Tool change system according to one of the preceding Claims 1 to 6, **characterized by** the fact that the releasable part is a flange (11) of the atomizer.

8. Tool change system according to one of the preceding Claims, **characterized by** the fact that in addition to the atomizer other tools can be deposited in the external change station (10) and coupled to connections (13) thereof.

## Revendications

1. Système de changement d'outil avec
un pulvérisateur pouvant être déplacé automatiquement par une machine de revêtement
et un dispositif de changement de pulvérisateur qui est constitué d'une partie fixe (F) montée sur la machine de revêtement et une partie (11) supportant le pulvérisateur, qui peut en être détachée,
la partie amovible (11) supportant le pulvérisateur étant fixée à la partie fixe (F) à l'aide d'un verrouillage pneumatique, qui peut être détaché par la commande d'un raccord d'air (14) du dispositif de changement de pulvérisateur, qui est disposé sur la partie amovible (11) supportant le pulvérisateur,
et avec une station de changement externe (10) pouvant être déplacée par la machine de revêtement, au niveau de laquelle le pulvérisateur est détaché et démonté automatiquement de la machine de revêtement,
le raccord d'air (14) disposé sur la partie amovible (11) pouvant être actionné par un dispositif de commande externe installé dans la station de changement (10), avec un raccord d'air (13) de la station de changement lors du démontage du pulvérisateur.

2. Système de changement d'outil selon la revendication 1, **caractérisé en ce que** le pulvérisateur ne peut être détaché automatiquement de la partie fixe (F) que lorsque la partie amovible (11) est amarrée au raccord d'air (13) de la station de changement (10).

3. Système de changement d'outil selon la revendication 1 ou 2, **caractérisé en ce que** le pulvérisateur est mis à la terre par le raccord d'air (13) de la station de changement (10) lors de l'amarrage à celui-ci.

4. Système de changement d'outil selon l'une des revendications 1 à 3, **caractérisé en ce que** le raccord d'air (14) de la partie amovible (11) peut être commandée automatiquement dans la station de changement (10).

5. Système de changement d'outil selon l'une des revendications précédentes, **caractérisé en ce que** le raccord d'air (13) de la station de changement (10) est accessible de l'extérieur.

6. Système de changement d'outil selon l'une des revendications précédentes, **caractérisé en ce que** le raccord d'air (13) de la station de changement (10) se trouve dans une plaque de maintien (10), rotative et/ou mobile linéairement, du dispositif de changement de pulvérisateur, dans lequel le pulvérisateur peut être déposé.

7. Système de changement d'outil selon l'une des revendications précédentes 1 à 6, **caractérisé en ce que** la partie amovible est une partie à bride (11) du pulvérisateur.

8. Système de changement d'outil selon l'une des revendications précédentes, **caractérisé en ce que**, dans la station de changement externe (10), en plus du pulvérisateur, d'autres outils peuvent être déposés et peuvent être amarrés à des raccords (13) qui s'y trouvent.
